# FASCICULE DE BREVET EUROPEEN

(11) **EP 3 211 255 B1**
(45) Date de publication et mention de la délivrance du brevet: **09.01.2019**
(21) Numéro de dépôt: 17020071.1
(22) Date de dépôt: 24.02.2017
(51) Int. Cl.: F16B 45/00, A45F 3/14, F16B 45/06, F41C 33/00, A45F 3/00

(54) **MOUSQUETON**
KARABINER
CARABINER

(30) Priorité: 25.02.2016 BE 201600033
(43) Date de publication de la demande: 30.08.2017
(73) Titulaire: Vanhulen High Precision Springs, 4040 Herstal (BE)
(72) Inventeur: Schaaps, Pierre, B-4040 Herstal (BE); Ansiaux, Jean-Marc, B-4040 Herstal (BE); Ansiaux, Philippe, B-4040 Herstal (BE)
(74) Mandataire: Powis de Tenbossche, Roland

(56) Documents cités:
- WO-A1-90/02495
- US-A1- 2007 056 147

## Description

La présente invention a pour objet un mousqueton convenant à un interface entre une sangle adaptée pour un homme et une boucle d'un objet à transporter d'un poids inférieur à 20kg par ledit homme, ledit mousqueton réalisé en une seule pièce en métal sans soudure présentant un poids inférieur à 30g, en particulier inférieur à 20g, ledit mousqueton présentant au moins une première partie avec au moins une fenêtre adaptée pour laisser passer une partie de la sangle et une deuxième partie comportant deux éléments en forme de crochet associés chacun à un bouton, lesdits éléments étant mobiles entre une première position où les éléments appuient l'un contre l'autre pour former une boucle sensiblement fermée, et une deuxième position où les éléments sont écartés l'un de l'autre pour former un espace libre entre eux adapté pour permettre le passage de la boucle de l'objet à transporter, ladite deuxième position étant atteinte en appliquant entre le pouce et l'index de la main de l'homme une pression sur les boutons pour les rapprocher l'un vers l'autre.

On connaît de tels mousquetons (voir par exemple US 2007/0056147 A) qui sont utilisés pour attacher un objet, par exemple une arme à une sangle. De tels mousquetons sont réalisés en acier inoxydable et ont en général un poids de l'ordre de 30 à 100g.

L'utilisation de tels mousquetons à des fins militaires, pour attacher une boucle métallique d'une arme à une sangle, par exemple portée en bandoulière par un militaire, a présentée de nombreux inconvénients, dont
- le déplacement des éléments en forme de boucle pour les écarter l'un de l'autre et permettre le passage de la boucle, nécessite un effort de pression important ;
- lors d'exercice, un choc du mousqueton ou de l'arme sur un support métallique a généré une rupture d'un ou des éléments en crochet du mousqueton ;
- l'aspect métallique brillant du mousqueton doit être camouflé au moyen d'une chaussette, ou d'une couche de peinture ;
- lors de course avec l'arme en bandoulière, les vibrations de l'arme sont transmises à la sangle sans amortissement ;
- etc.

La présente invention vise à remédier à un ou plusieurs des inconvénients cités ci-avant. Il est clair que le mousqueton selon l'invention est un mousqueton qui trouve des applications à la fois dans le domaine militaire que dans le domaine civil.

L'invention a ainsi pour objet un mousqueton convenant à un interface entre une sangle adaptée pour un homme et une boucle d'un objet à transporter d'un poids inférieur à 20kg par ledit homme, ledit mousqueton réalisé en une seule pièce en métal sans soudure présentant un poids inférieur à 30g, en particulier inférieur à 20g, par exemple de 10 à 15g, ledit mousqueton présentant au moins une première partie avec au moins une fenêtre adaptée pour laisser passer une partie de la sangle et une deuxième partie comportant deux éléments en forme de crochet associés chacun à un bouton, lesdits éléments étant mobiles entre une première position où les éléments appuient l'un contre l'autre pour former une boucle sensiblement fermée, et une deuxième position où les éléments sont écartés l'un de l'autre pour former un espace libre entre eux adapté pour permettre le passage de la boucle de l'objet à transporter, ladite deuxième position étant atteinte en appliquant entre le pouce et l'index de la main de l'homme une pression sur les boutons pour les rapprocher l'un vers l'autre, caractérisé en ce que le mousqueton est réalisé en un acier ressort présentant une dureté de 40 à 50 HRc, avantageusement de 41 à 46 HRc, par exemple 42, 43, 44 ou 45 HRc, une résistance à la traction supérieure de plus de 450 N/mm², avantageusement de plus de 500 N/mm², de préférence de plus de 530N/mm² (par exemple d'environ 545 à 570N/mm², voire plus) et une limite élastique de moins de 0,5%, avantageusement de moins de 0,3%.

L'acier ressort présente au moins dans la deuxième partie du mousqueton une phase martensitique. Cette deuxième partie est de préférence réalisée en un acier martensitique, De façon avantageuse, le mousqueton dans son ensemble comprend une phase martensitique ou est réalisé en acier martensitique.

L'acier utilisé est avantageusement magnétique, de préférence recouvert d'un revêtement non magnétique. Un tel revêtement réduit ainsi le caractère magnétique de l'acier et réduit la force d'attraction et l'adhérence de pièces métalliques. Ce revêtement sera avantageusement hydrophobe, par exemple du type fluoré. Un tel revêtement est par exemple du type silicone ou du type décrit dans US2005/0051078.

Le mousqueton a une épaisseur de moins de 4mm, en particulier de moins de 3mm. De préférence l'épaisseur des éléments en forme de crochet est de moins de 2,5mm, en particulier comprise entre 1,5mm et 2mm.

Le mousqueton est avantageusement soumis à un traitement thermique ou recuit à une température comprise entre 500 et 700°C, et/ou à une trempe martensitique (par exemple dans un bain d'huile ou de sel fondu), et avantageusement d'un revenu.

Selon une forme de réalisation particulière, le mousqueton est réalisé dans un acier au carbone comportant outre du fer :
- de 0,5 à 1,2 % en poids, de préférence de 0,7 à 1 % en poids de Carbone ;
- de 0,1 à 0,5 % en poids, de préférence de 0,15 à 0,3 % en poids de Silicium ;
- de 0,2 à 1 % en poids, de préférence de 0,4 à 0,8 % en poids de Manganèse ;
- de 0 à 0,2 % en poids, de préférence de 0,005 à 0,05 % en poids de Phosphore ;
- moins de 0,05 % en poids, de préférence moins de 0,01 % en poids de soufre ;
- de 0,05 à 1% en poids, de préférence de 0,1 à 0,5 % en poids d'un mélange comportant au moins du chrome, du nickel, du molybdène et de l'aluminium (par exemple de 0,1 à 0,3% en poids de chrome, de 0,01 à 0,1% de nickel, de 0,001 à 0,01% en poids de molybdène et de 0,01 à 0,05% d'aluminium),
- moins de 0,1 % en poids, avantageusement moins de 0,05 % en poids d'azote ;
- moins de 0,5 % en poids, avantageusement moins de 0,3% d'autres éléments (par exemple moins de 0,1%).

Selon une autre particularité d'une forme de réalisation, le mousqueton est réalisé en un acier au carbone (pour ressort) soumis à un recuit et à une trempe différée.

Selon un détail avantageux, le mousqueton est recouvert d'une couche oxydée (couche oxydée de couleur sombre ou noire) et/ou d'une couche de protection (par exemple par application d'une couche phosphate, d'une couche polymère, avantageusement présentant une présentant une dureté shore de plus de 50 shore, en particulier de 60 à 100 shore.). La couche polymère présente par exemple une épaisseur de moins de 200µm, avantageusement de moins de 100µm L'application d'un revêtement polymère se fera par exemple en évitant un revêtement sur les parties des éléments en forme de crochet se touchant. Dans une variante, le revêtement recouvre tout le mousqueton. L'application du revêtement sur les éléments en forme de crochet est alors effectuée avec les éléments écartés l'un de l'autre.

A titre de revêtement polymère, on pourra utiliser une couche PVC, PU, polymère fluoré.

Les boutons peuvent être marqués ou personnalisés. Les boutons sont également adaptés pour limiter l'écartement maximal des éléments en forme de crochet. L'invention a encore pour objet une combinaison d'une sangle et d'un mousqueton selon l'invention, pour permettre à un homme de porter un objet de moins de 20kg dont une boucle est attachée à la deuxième partie du mousqueton après avoir exercé une pression sur les boutons pour écarter l'un de l'autre les éléments en forme de crochet.

Des particularités et détails d'une forme de réalisation préférée d'un mousqueton selon l'invention ressortiront de la description détaillée suivante, dans laquelle il est fait référence aux dessins ci-annexés. Dans ces dessins,
- la figure 1 est une vue de face d'un mousqueton suivant l'invention,
- la figure 2 est une vue de côté du mousqueton de la figure 1 ;
- la figure 3 est une vue de haut du mousqueton de la figure 1 ,
- la figure 4 est une vue en perspective du mousqueton de la figure 1 ;
- la figure 5 est une vue en perspective du mousqueton de la figure 1, mais avec les éléments en forme de crochet écartés l'un de l'autre.

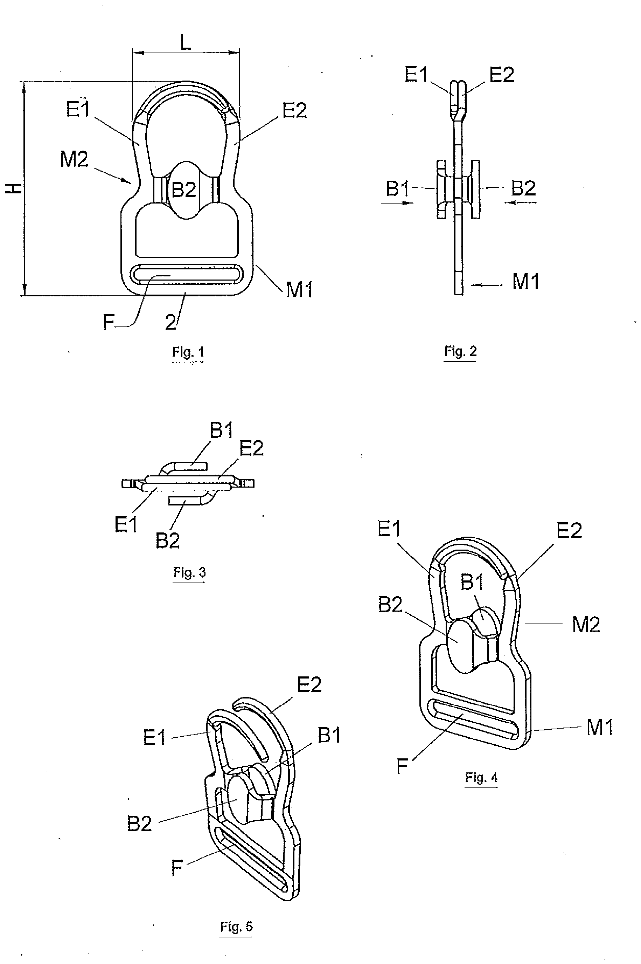

Le mousqueton de la figure 1 sert d'interface entre une sangle adaptée pour un homme et une boucle d'un objet à transporter d'un poids inférieur à 20kg par ledit homme, ledit mousqueton permettant d'attacher ou de détacher aisément le mousqueton par rapport à la boucle d'un objet à transporter. Le mousqueton M est réalisé en une seule pièce en métal sans soudure présentant un poids inférieur à 30g, en particulier inférieur à 20g, par exemple de 10 à 15g. Le mousqueton a par exemple une hauteur totale H de 50 à 100mm, et une largeur totale de 25 à 50mm. Ledit mousqueton présente au moins une première partie M1 avec au moins une fenêtre F adaptée pour laisser passer une partie de la sangle et une deuxième partie M2 comportant deux éléments E1,E2 en forme de crochet associés chacun à un bouton B1,B2. La première partie M1 s'étend sur une hauteur d'environ 10 à 15mm et présente une fenêtre F de largeur de l'ordre de 20 à30mm et de hauteur d'environ 3 à 5mm. Les dimensions de la fenêtre seront adaptées à la section de la sangle à insérer dans la fenêtre F1, par exemple pour éviter ou limiter le risque de retournement ou de vrille de la sangle dans la fenêtre. Les bords de la fenêtre ou son contour sont arrondis pour éviter tout risque de coupe de la sangle. La fenêtre est entourée par des bords 2,3 avec une largeur de 2 à 5mm. Lesdits éléments E1,E2 sont mobiles l'un par rapport à l'autre par l'application d'une pression sur les boutons B1,B2, entre une première position (de repos) où les éléments appuient l'un contre l'autre pour former une boucle sensiblement fermée (les éléments ont leurs extrémités libres rapprochées l'une de l'autre pour former une boucle fermée), et une deuxième position où les éléments ont leurs extrémités libres écartées l'une de l'autre (par la pression exercée sur les boutons) pour former une boucle ouverte permettant l'introduction de la boucle de l'objet à transporter. L'écartement maximal des extrémités libres des éléments est défini par le déplacement maximal des boutons B1,B2 l'un vers l'autre, ce déplacement maximal correspondant à la position où les boutons butent l'un sur l'autre. Le déplacement maximal des boutons l'un vers l'autre est par exemple de 5 à 6 mm, ce qui correspond alors à un écartement des extrémités de plus de 5 à 6mm, par exemple de 8 à 10mm.

La deuxième position des extrémités libres des éléments E1,E2 est par exemple atteinte en appliquant entre le pouce et l'index d'une main une pression sur les boutons B1,B2 pour les rapprocher l'un vers l'autre.

Les contours des éléments E1,E2 et des boutons B1,B2 sont arrondis. Les boutons B1,B2 s'étendent dans des plans écartés du plan médian de la première partie M1 et des éléments E1,E2. Les boutons sont attachés respectivement à un élément E1 ou E2 par une pièce intermédiaire.

Les éléments E1,E2 ont une largeur d'environ 3mm et se terminent par une extrémité en forme de crochet (avec extrémité du crochet arrondie) .

Les boutons B1,B2 qui permettent un écartement des éléments l'un vers l'autre permettent également de limiter la position de la boucle de l'objet une fois les éléments rapprochés l'un de l'autre.

Le mousqueton est réalisé en une seule pièce, en un acier ressort présentant une dureté Rockwell de 40 à 50 HRc, avantageusement de 41 à 46 HRc, par exemple 42, 43, 44 ou 45 HRc, une résistance à la traction supérieure de plus de 450 N/mm², avantageusement de plus de 500 N/mm², de préférence de plus de 530N/mm² (par exemple d'environ 545 à 570N/mm², voire plus) et une limite élastique de moins de 0,5%, avantageusement de moins de 0,3%.

La dureté Rockwell est mesurée par une machine de dureté Rockwell de type AFFRI 206EX, avec une sonde avec une pointe en diamant de type BQC 106417. La méthode est décrite dans la norme NF EN6508-2.
Méthode d'étalonnage : KI/02/KC/M01
Moyens d'étalonnage suivant normes R1967/12 et RS012/4

La résistance à la traction a été mesurée par un appareil de type EAZYDUR, selon la méthode décrite dans la norme ISO376.
Méthode d'étalonnage : CTC.00052 ind 01
Moyens d'étalonnage suivant normes R2704/4 et R2705/5

La limite élastique est certifiée par le certificat matière conforme à la norme C75S EN10132-4.

L'acier ressort présente au moins dans la deuxième partie du mousqueton une phase martensitique. Cette deuxième partie est de préférence réalisée en un acier martensitique. De façon avantageuse, le mousqueton dans son ensemble comprend une phase martensitique ou est réalisé en acier martensitique.

L'acier utilisé est avantageusement non magnétique.

Le mousqueton a une épaisseur de moins de 4mm, en particulier de moins de 3mm. De préférence l'épaisseur des éléments E1,E2 en forme de crochet est de moins de 2,5mm, en particulier comprise entre 1,5mm et 2mm.

Le mousqueton est avantageusement soumis à un traitement thermique ou recuit à une température comprise entre 500 et 700°C, et/ou à une trempe martensitique (par exemple dans un bain d'huile ou de sel fondu), et avantageusement d'un revenue.

Selon une forme de réalisation particulière, le mousqueton est réalisé dans un acier au carbone comportant outre du fer :
- de 0,5 à 1,2 % en poids, de préférence de 0,7 à 1 % en poids de Carbone ;
- de 0,1 à 0,5 % en poids, de préférence de 0,15 à 0,3 % en poids de Silicium ;
- de 0,2 à 1 % en poids, de préférence de 0,4 à 0,8 % en poids de Manganèse ;
- de 0 à 0,2 % en poids, de préférence de 0,005 à 0,05 % en poids de Phosphore ;
- moins de 0,05 % en poids, de préférence moins de 0,01 % en poids de soufre ;
- de 0,05 à 1% en poids, de préférence de 0,1 à 0,5 % en poids d'un mélange comportant au moins du chrome, du nickel, du molybdène et de l'aluminium (par exemple de 0,1 à 0,3% en poids de chrome, de 0,01 à 0,1% de nickel, de 0,001 à 0,01% en poids de molybdène et de 0,01 à 0,05% d'aluminium),
- moins de 0,1 % en poids, avantageusement moins de 0,05 % en poids d'azote ;
- moins de 0,5 % en poids, avantageusement moins de 0,3% d'autres éléments (par exemple moins de 0,1%).

Selon une autre particularité d'une forme de réalisation, le mousqueton est réalisé en un acier au carbone (pour ressort) soumis à un recuit et à une trempe différée.

Selon un détail avantageux, le mousqueton est recouvert d'une première couche oxydée (couche oxydée de couleur sombre ou noire) et ensuite d'une couche extérieure de protection (par exemple par application d'une couche polymère, avantageusement présentant une présentant une dureté shore de plus de 50 shore, en particulier de 60 à 100 shore.). La couche polymère présente par exemple une épaisseur de moins de 200µm, avantageusement de moins de 100µm. Le polymère appliqué est par exemple un PVC, un Polyurethanne PU, un PTFE (polytétrafluoroéthylène, téflon), un PEEK (poly éther éther cétone), polycarbonate, acétal (Delrin® et Celcon® à titre d'exemple) un epoxy, un revêtement NP3 ou un revêtement de camouflage (Como de Browning), un silicone, un Nylon, un polysulfone, un polyéthersulfone, un polyamide-imide, etc. et leurs mélanges , lesdits polymères étant avantageusement renforcés de fibres (par exemple de verre de carbone, de verre, ...). Pour l'application de ce revêtement, on pulvérisera par exemple une composition liquide, par exemple dilué dans un solvant ou mise en suspension dans un milieu liquide (aqueux ou non). On peut également utiliser des résines liquides avec un ou des agents durcisseurs (par exemple au rayon UV, et/ou par effet thermique) L'application d'un revêtement polymère se fera par exemple en évitant un revêtement sur les parties des éléments en forme de crochet se touchant. Dans une variante plus intéressante, le revêtement recouvre tout le mousqueton. L'application du revêtement sur les éléments en forme de crochet est alors effectuée par pulvérisation ou trempage dans un bain avec les éléments écartés l'un de l'autre.

A titre de revêtement polymère, on pourra utiliser une couche PVC, PU, polymère fluoré. Le revêtement polymère peut être du type mono couche ou multi couches.

Les boutons peuvent être marqués ou personnalisés. Les boutons sont également adaptés pour limiter l'écartement maximal des éléments en forme de crochet.

## Revendications

1. Mousqueton (M) convenant à un interface entre une sangle adaptée pour un homme et une boucle d'un objet à transporter d'un poids inférieur à 20kg par ledit homme, ledit mousqueton réalisé en une seule pièce en métal sans soudure présentant un poids inférieur à 30g, en particulier inférieur à 20g, ledit mousqueton (M) présentant au moins une première partie (M1) avec au moins une fenêtre (F) adaptée pour laisser passer une partie de la sangle et une deuxième partie (M2) comportant deux éléments (E1,E2) en forme de crochet associés chacun à un bouton (B1,B2), lesdits éléments (E1,E2) étant mobiles entre une première position où les éléments (E1,E2) appuient l'un contre l'autre pour former une boucle sensiblement fermée, et une deuxième position où les éléments (E1,E2) sont écartés l'un de l'autre pour former un espace libre entre eux adapté pour permettre le passage de la boucle de l'objet à transporter, ladite deuxième position étant atteinte en appliquant entre le pouce et l'index de la main de l'homme une pression sur les boutons (B1,B2) pour les rapprocher l'un vers l'autre, **caractérisé en ce que** le mousqueton (M) est réalisé en un acier ressort présentant une dureté de 40 à 50 HRc, une résistance à la traction supérieure de plus de 450 N/mm², avantageusement de plus de 500 N/mm², de préférence de plus de 530N/mm², et une limite élastique de moins de 0,5%.

2. Mousqueton (M) suivant la revendication 1, **caractérisé en ce qu'**il est soumis à un traitement thermique ou recuit à une température comprise entre 500 et 700°C, et/ou à une trempe martensitique, et avantageusement d'un revenu.

3. Mousqueton (M) suivant la revendication 1 ou 2, **caractérisé en ce qu'**il est réalisé dans un acier au carbone comportant outre du fer :
- de 0,5 à 1,2 % en poids, de préférence de 0,7 à 1 % en poids de Carbone ;
- de 0,1 à 0,5 % en poids, de préférence de 0,15 à 0,3 % en poids de Silicium ;
- de 0,2 à 1 % en poids, de préférence de 0,4 à 0,8 % en poids de Manganèse ;
- de 0 à 0,2 % en poids, de préférence de 0,005 à 0,05 % en poids de Phosphore ;
- moins de 0,05 % en poids, de préférence moins de 0,01 % en poids de soufre ;
- de 0,05 à 1% en poids, de préférence de 0,1 à 0,5 % en poids d'un mélange comportant au moins du chrome, du nickel, du molybdène et de l'aluminium,
- moins de 0,1 % en poids, avantageusement moins de 0,05 % en poids d'azote ;
- moins de 0,5 % en poids, avantageusement moins de 0,3% d'autres éléments.

4. Mousqueton (M) suivant l'une quelconque des revendications précédentes, **caractérisé en ce qu'**il est réalisé en un acier au carbone soumis à un recuit et à une trempe différée.

5. Mousqueton (M) suivant l'une quelconque des revendications précédentes, **caractérisé en ce qu'**il est recouvert d'une couche oxydée et/ou d'une couche de protection.

6. Mousqueton (M) suivant la revendication précédente, **caractérisé en ce qu'**il comporte une couche de protection polymère présentant une dureté shore de plus de 50 shore, en particulier de 60 à 100 shore.

7. Mousqueton (M) suivant l'une quelconque des revendications précédentes, **caractérisé en ce qu'**au moins pour sa deuxième partie, il est réalisé en acier ressort avec une phase martensitique.

8. Mousqueton (M) suivant la revendication précédente, **caractérisé en ce qu'**il est réalisé en acier ressort martensitique.

9. Mousqueton (M) suivant l'une quelconque des revendications précédentes, **caractérisé en ce qu'**il est réalisé en acier ressort magnétique, avantageusement recouvert d'une couche anti magnétique ou non magnétique, avantageusement hydrophobe.

10. Mousqueton suivant l'une quelconque des revendications précédentes, **caractérisé en ce qu'**il présente une épaisseur de moins de 4mm, en particulier de moins de 3mm, et **en ce que** de préférence, l'épaisseur des éléments en forme de crochet est de moins de 2,5mm, en particulier comprise entre 1,5mm et 2mm.

11. Combinaison d'une sangle et d'un mousqueton (M) selon l'une des revendications précédentes, pour permettre à un homme de porter un objet de moins de 20kg dont une boucle est attachée à la deuxième partie (M2) du mousqueton après avoir exercé une pression sur les boutons (B1,B2) pour écarter l'un de l'autre les éléments en forme de crochet.

12. Combinaison d'une arme, en particulier arme à feu, et d'une combinaison selon la revendication précédente.

## Patentansprüche

1. Karabiner (M), der als Verbindung zwischen einem an eine Person angepassten Gurt und einer Schlaufe eines durch die Person zu transportierenden Gegenstandes mit einem Gewicht von weniger als 20kg eingerichtet ist, wobei der Karabiner aus einem einzigen schweißfreien Metallstück mit einem Gewicht von weniger als 30g, insbesondere von weniger als 20g, hergestellt ist, wobei der Karabiner (M) wenigstens einen ersten Bereich (M1) mit wenigstens einem Fenster (F) zum Durchlassen eines Abschnitts des Gurts und einen zweiten Bereich (M2) mit zwei Elementen (E1, E2) in Gestalt von jeweils mit einer Taste (B1, B2) verbundenen Haken aufweist, wobei die Elemente (E1, E2) zwischen einer ersten Stellung, in der die Elemente (E1, E2) zum Ausbilden einer im Wesentlichen geschlossenen Schlaufe aneinander anliegen, und einer zweiten Stellung bewegbar sind, in der die Elemente (E1, E2) voneinander beabstandet sind, um zwischen sich einen Freiraum auszubilden, um den Durchlass der Schlaufe des zu transportierenden Gegenstands zu gestatten, wobei die zweite Stellung durch Ausüben eines Drucks zwischen dem Daumen und dem Zeigefinger der Hand der Person auf die Tasten (B1, B2) zu deren gegenseitigem Annähern eingenommen wird, **dadurch gekennzeichnet, dass** der Karabiner (M) aus einem Federstahl mit einer Härte von 40 bis 50 HRc hergestellt ist, eine Zugfestigkeit von mehr als 450 N/mm², vorteilhafterweise von mehr als 500 N/mm², bevorzugt von mehr als 530 N/mm², und eine Elastizitätsgrenze von weniger als 0,5% aufweist.

2. Karabiner (M) nach Anspruch 1, **dadurch gekennzeichnet, dass** er einer thermischen Behandlung oder Ausglühen bei einer Temperatur zwischen 500 und 700°C und/oder einem martensitischen Härten und vorteilhafterweise einem Anlassen unterworfen worden ist.

3. Karabiner (M) nach Anspruch 1 oder Anspruch 2, **dadurch gekennzeichnet, dass** er aus einem Kohlenstoffstahl hergestellt ist, der neben Eisen
- 0,5 bis 1,2 Gew%, vorzugsweise 0,7 bis 1 Gew%, an Kohlenstoff,
- 0,1 bis 0,5 Gew%, vorzugsweise 0,15 bis 0,3 Gew%, an Silizium,
- 0,2 bis 1 Gew%, vorzugsweise 0,4 bis 0,8 Gew%, an Mangan,
- 0 bis 0,2 Gew%, vorzugsweise 0,005 bis 0,05 Gew%, an Phosphor,
- weniger als 0,05 Gew%, vorzugsweise weniger als 0,01 Gew%, an Schwefel,
- 0,05 bis 1 Gew%, vorzugsweise 0,1 bis 0,5 Gew%, einer Mischung aufweist, die wenigstens Chrom, Nickel, Molybdän und Aluminium umfasst,
- weniger als 0,1 Gew%, vorzugsweise weniger als 0,05 Gew%, an Stickstoff,
- weniger als 0,5 Gew%, vorzugsweise weniger als 0,3 Gew%, an weiteren Elementen
aufweist.

4. Karabiner (M) nach einem der vorangehenden Ansprüche, **dadurch gekennzeichnet, dass** er aus einem Kohlenstoffstahl hergestellt ist, der einem Ausglühen und einem Wärmebadhärten unterworfen worden ist.

5. Karabiner (M) nach einem der vorangehenden Ansprüche, **dadurch gekennzeichnet, dass** er von einer Oxidschicht und/oder einer Schutzschicht bedeckt ist.

6. Karabiner (M) nach dem vorangehenden Anspruch, **dadurch gekennzeichnet, dass** er eine Polymerschutzschicht aufweist, die eine Shore-Härte von mehr als 50 Shore, insbesondere von 60 bis 100 Shore, aufweist.

7. Karabiner (M) nach einem der vorangehenden Ansprüche, **dadurch gekennzeichnet, dass** er wenigstens in seinem zweiten Bereich aus einem Federstahl mit einer martensitischen Phase hergestellt ist.

8. Karabiner (M) nach dem vorangehenden Anspruch, **dadurch gekennzeichnet, dass** er aus einem martensitischen Federstahl hergestellt ist.

9. Karabiner (M) nach einem der vorangehenden Ansprüche, **dadurch gekennzeichnet, dass** er aus einem magnetischen Federstahl, vorzugsweise überzogen von einer antimagnetischen oder nicht magnetischen, vorteilhafterweise hydrophoben, Schicht hergestellt ist.

10. Karabiner nach einem der vorangehenden Ansprüche, **dadurch gekennzeichnet, dass** er mit einer Dicke von weniger als 4mm, insbesondere von weniger als 3mm, hergestellt ist, und dass die Dicke der Elemente in Gestalt eines Hakens vorzugsweise weniger als 2,5mm, und insbesondere zwischen 1,5mm und 2mm, ist.

11. Verbindung eines Gurts und eines Karabiners (M) nach einem der vorangehenden Ansprüche, um einer Person zu gestatten, einen Gegenstand von weniger als 20kg zu transportieren, bei dem eine Schlaufe mit dem zweiten Bereich (M2) des Karabiners verbunden ist, nachdem auf die Tasten (B1, B2) ein Druck ausgeübt worden ist, um die Elemente in Gestalt von Haken voneinander zu beabstanden.

12. Verbindung mit einer Waffe, insbesondere einer Feuerwaffe, und einer Verbindung gemäß dem voranstehenden Anspruch.

## Claims

1. Snap hook (M) serving as an interface between a strap adapted for a man and a loop of an object to be transported weighing less than 20 kg by said man, said snap hook made of a single piece of seamless metal having a lower weight at 30g, in particular less than 20g, said snap hook (M) having at least a first portion (M1) with at least one window (F) adapted to pass a portion of the strap and a second portion (M2) comprising two hook shaped elements (E1, E2) each associated with a button (B1, B2), said elements (E1, E2) being movable between a first position where the elements (E1, E2) support one against the other to form a substantially closed loop, and a second position where the elements (E1, E2) are spaced from each other to form a free space between them adapted to allow the passage of the loop of the object to be transported, said second position being reached by applying between the thumb and forefinger of the human hand a pressure on the buttons (B1, B2) to bring them towards each other, **characterized in that** the snap hook (M) is made of a steel spring having a hardness of 40 to 50 HRc, a tensile strength greater than 450 N/mm², advantageously more than 500 N/mm², preferably more than 530N/mm², and an elastic limit of less than 0.5%.

2. Snap hook (M) according to Claim 1, **characterized in that** it is subjected to a heat treatment or annealing at a temperature of between 500 and 700 °C, and/or to a martensitic quench, and advantageously a tempering.

3. Snap hook (M) according to Claim 1 or 2, **characterized in that** it is made from a carbon steel comprising, in addition to iron:
- from 0.5 to 1.2% by weight, preferably from 0.7 to 1 % by weight of carbon;
- from 0.1 to 0.5% by weight, preferably from 0.15 to 0.3% by weight of silicon;
- from 0.2 to 1% by weight, preferably from 0.4 to 0.8% by weight of manganese;
- from 0 to 0.2% by weight, preferably from 0.005 to 0.05% by weight of phosphorus;
- less than 0.05% by weight, preferably less than 0.01% by weight of sulfur;
- from 0.05 to 1% by weight, preferably from 0.1 to 0.5% by weight of a mixture comprising at least chromium, nickel, molybdenum and aluminum,
- less than 0.1% by weight, advantageously less than 0.05% by weight of nitrogen;
- less than 0.5% by weight, advantageously less than 0.3% of other elements.

4. Snap hook (M) according to any one of the preceding claims, **characterized in that** it is made of carbon steel subjected to annealing and to a delayed quenching.

5. Snap hook (M) according to any one of the preceding claims, **characterized in that** it is covered with an oxidized layer and/or a protective layer.

6. Snap hook (M) according to the preceding claim, **characterized in that** it comprises a polymeric protective layer having a shore hardness of more than 50 shore, in particular from 60 to 100 shore.

7. Snap hook (M) according to any one of the preceding claims, **characterized in that** at least for its second part, it is made of spring steel with a martensitic phase.

8. Snap hook (M) according to the preceding claim, **characterized in that** it is made of martensitic spring steel.

9. Snap hook (M) according to any one of the preceding claims, **characterized in that** it is made of magnetic spring steel, advantageously covered with an anti-magnetic or non-magnetic layer, advantageously hydrophobic.

10. Snap hook according to any one of the preceding claims, **characterized in that** it has a thickness of less than 4 mm, in particular of less than 3 mm, and **in that** the thickness of the hook shaped elements is preferably less than 2.5mm, in particular comprised between 1.5mm and 2mm.

11. Combination of a strap with a snap hook (M) according to one of the preceding claims, to enable a man to carry an object weighing less than 20kg, a loop of which is attached to the second part (M2) of the snap hook after exerting pressure on the buttons (B1, B2) to separate the hook-shaped elements from one another.

12. Combination of a weapon, in particular a firearm, with a combination according to the preceding claim.
